# EUROPEAN PATENT SPECIFICATION

(11) **EP 2 676 817 B1**
(45) Date of publication and mention of the grant of the patent: **06.05.2015**
(21) Application number: 13172725.7
(22) Date of filing: 19.06.2013
(51) Int. Cl.: B60C 15/06, B29D 30/48

(54) **Bead core-apex subassembly, pneumatic tire therewith, and method of manufacturing a bead core-apex subassembly**
Wulstkern-Wulstreiter Unterbaugruppe, Luftreifen damit und Verfahren zur Herstellung einer Wulstkern-Wulstreiter Unterbaugruppe
Sous-assemblage de bourrage sur tringle annulaire, pneu fabriqué avec celui-ci et procédé de fabrication d'un sous-assemblage de bourrage sur tringle annulaire

(30) Priority: 20.06.2012 US 201213527623
(43) Date of publication of application: 25.12.2013
(73) Proprietor: The Goodyear Tire & Rubber Company, Akron, Ohio 44316 (US)
(72) Inventor: Lemaire, Erich Nicolaus, 9764 Marnach (LU); Kohnen, Daniel, 4790 Burg-Reuland (BE); De Monte, Patrice, 6700 Arlon (BE); Burg, Gary Robert, Massillon, OH 44646 (US)
(74) Representative: Kutsch, Bernd

(56) References cited:
- DE-A1-102006 011 158
- GB-A- 1 589 324
- US-A1- 2004 244 894

## Description

### Field of the Invention

The invention relates to a bead core-apex subassembly as it may be used as a pre-assembled component in the manufacturing of a pneumatic tire. It also relates to a pneumatic tire comprising such a bead core-apex subassembly. Finally, the invention relates to a method of manufacturing a bead core-apex subassembly.

### Background of the Invention

EP 1 123 198 B1 describes a bead core-apex subassembly and a tire comprising such an assembly. The apex filler is produced from an extruded strip of elastomeric material.

EP 1 165 306 B1 describes a combined bead loading and apex application system. A bead core-apex subassembly is manufactured, transferred onto a building drum and employed into a pneumatic tire.

US Patent Publication 2011/0146884 describes the mixing of rubber compounds for use in tire manufacturing and a method of applying a blended rubber composition on a substrate such as a tire building drum or a core.

US Patent Publication 2011/0146888 describes again the mixing of rubber compounds for use in tire manufacturing. It describes also a method of forming a rubber article comprising two or more layers, the method comprising the steps of extruding a first rubber compound through a first extruder and a first gear pump, applying one or more first strips of rubber of the mixture directly onto a substrate, mixing a second rubber compound, and applying one or more second strips of rubber of the second mixture. The rubber article may be an apex of a pneumatic tire, the apex comprising two or more layers of rubber.

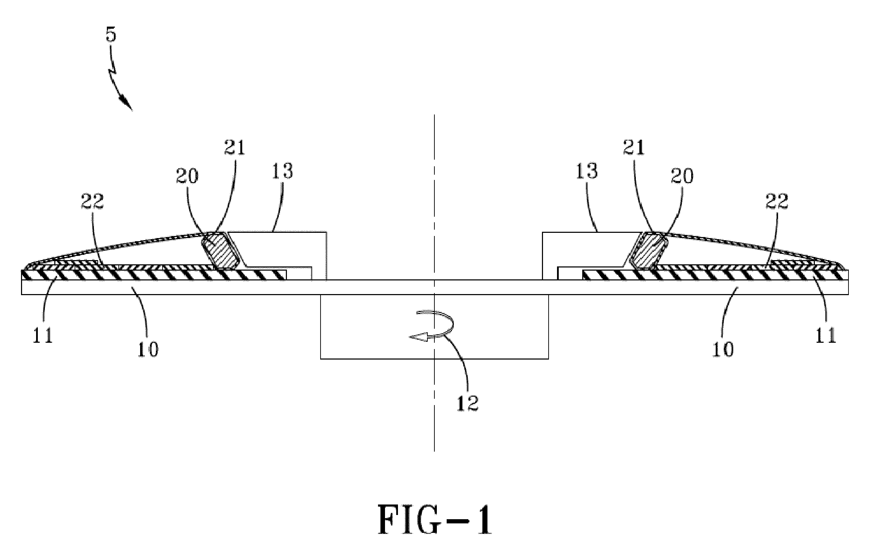

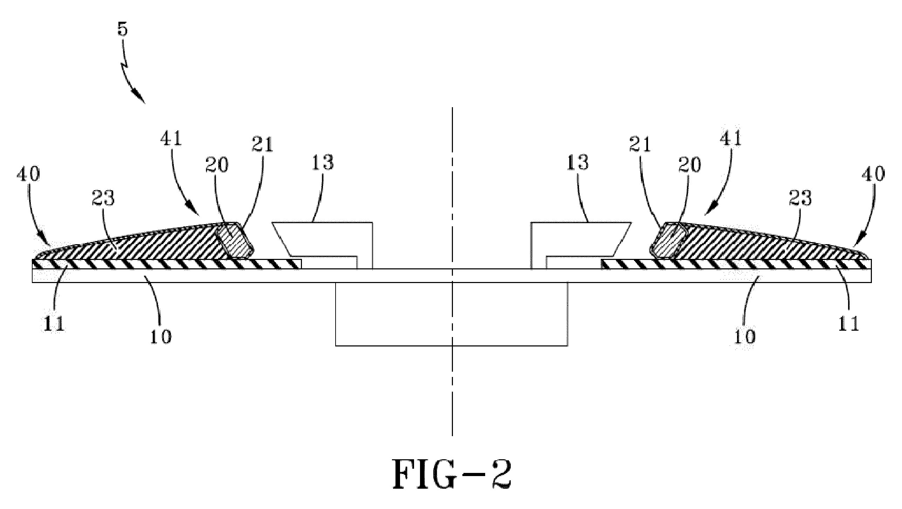

US Patent Publication 2004/0089400 describes a method and apparatus for forming an annular elastomeric tire component. An elastomer is extruded annularly onto a support surface and a strip of the elastomer material is shaped to a predetermined profile between a shaping die and the support surface. The method may be used to form multilayered components. Fig. 1 and Fig. 2 show a bead core-apex subassembly manufactured using this method.

US Patent 7,501,033 describes a method of manufacturing a bead core-apex-chipper subassembly for use in a pneumatic tire. A continuous elastomeric strip is extruded on a support surface as an apex strip, a chipper ply strip is attached to the apex strip, and the chipper and apex subassembly is attached to an annular bead core.

EP 1 749 648 A2 describes a method and apparatus for applying a strip of elastomeric component to a surface. An apex may be shaped having a tip and a portion opposite the tip which is attached to a bead core. The apparatus comprises a nozzle in fluid communication with a pumping means and a shaping die. A tongue is rotatably mounted adjacent the nozzle to compress an elastomeric material applied through the nozzle as a strip onto a surface against said surface.

A challenge has been presented to provide an improved method of manufacturing a bead core-apex subassembly which may be easier to handle and wherein less subsequent manufacturing steps are required when incorporating such a subassembly in a pneumatic tire.

A further challenge has been presented to provide an improved bead core-apex subassembly which may be manufactured using this method and which may be easily adapted in its physical characteristics to specific tire performance requirements such as handling performance, durability performance and, if applicable, run-flat performance.

A further challenge has been presented to provide a method and an apparatus which allows for manufacturing tires with smaller apexes to reduce tire weight.

GB-A- 1 589 324 describes a bead core-apex assembly in accordance with the preamble of claim 1.

### Summary of the Invention

The invention relates to a bead core apex substantially in accordance with claim 1 and to a method in accordance with claim 9.

Dependent claims refer to preferred embodiments of the invention.

In an example of the invention, a bead core-apex subassembly is provided, the subassembly comprising an annular bead core, a flipper and an apex, wherein the flipper is wrapped about the bead core such that it encloses the bead core, and wherein the apex is in contact with the flipper and comprises at least a first segment and a second segment, the first segment having a composition different from the composition of the second segment.

In yet another example aspect of the invention, the bead core is a conventional bead core and comprises, for instance, one or more steel wires.

In still another example aspect of the invention, the flipper is a conventional flipper as used in tire manufacturing. It may be a fabric or a reinforced rubber ply.

In yet another example aspect of the invention, the apex has substantially a triangular shape and extends from the flipper to an apex tip.

In still another example aspect of the invention, at least one of the cross-section of the first segment and the cross-section of the second segment has substantially a triangular shape.

In yet another example aspect of the invention, the apex consists of the first segment and the second segment wherein the cross-section of the first segment and the cross-section of the second segment have substantially a triangular shape.

In still another example aspect of the invention, only the first segment of the apex is in contact with the flipper.

In yet another example aspect of the invention, the first segment comprises a first rubber composition and the second segment comprises a second rubber composition wherein the shore A hardness of the first rubber composition may differ by at least 3, alternatively by at least 5 or at least 10, from the shore A hardness of the second rubber composition and/or wherein the shore A hardness of the first segment is larger, by at least 3 larger, than the shore A hardness of the second segment.

In the bead core apex subassembly, the flipper completely encloses the bead core.

In yet another example aspect of the invention, a pneumatic tire comprising a bead core-apex subassembly is provided wherein the bead core-apex subassembly is a subassembly as described above, i.e., comprising an annular bead core, a flipper and an apex, wherein the flipper is wrapped about the bead core such that it encloses the bead core, and wherein the apex is in contact with the flipper and comprises at least a first segment and a second segment, the first segment having a composition different from the composition of the second segment.

In still another example aspect of the invention, a method of manufacturing a bead core-apex subassembly is provided The method comprises the steps of providing an annular bead core; wrapping a flipper about the annular bead core such that the flipper encloses the bead core; positioning the bead core with the flipper wrapped about the bead core on a rotatable support surface; providing a nozzle in fluid communication with a pumping or extrusion device; rotating the support surface about an axis; and discharging a rubber compound through the nozzle onto the rotating support surface and forming an apex from the discharged rubber compound, the apex being attached to the flipper.

In yet another example aspect of the invention, the apex is shaped into a substantially triangular shape while or after discharging the rubber compound onto the rotating support surface, the apex extending from a base to a tip, the base being attached to the flipper.

In still another example aspect of the invention, the pumping or extrusion device comprises a gear pump.

In yet another example aspect of the invention, the nozzle comprises a tongue, the tongue compressing the rubber compound against at least one of the rotating support surface and the bead core with the flipper wrapped about the bead core.

In still another example aspect of the invention, the rotatable support surface rotates by substantially 360 degrees during discharge of the rubber compound.

In yet another example aspect of the invention, the rubber compound is discharged substantially in the shape of a strip onto the rotating support surface and the nozzle is moved radially relative to the annular bead core located on the support surface while discharging the strip rubber compound.

In still another example aspect of the invention, the apex is formed from one or more rubber strips discharged through one or more nozzles onto the rotating support surface.

In yet another example aspect of the invention, at least two different rubber compounds are discharged onto the rotating support surface for forming an apex having a first segment and a second segment, the first segment having a composition different from the composition of the second segment.

In still another example aspect of the invention, the support surface rotates horizontally and the axis of rotation is perpendicular to the support surface.

In yet another example aspect of the invention, the support surface comprises a stop or a clamping device for positioning or holding the bead core with the flipper wrapped about the bead core on the rotatable support surface.

### Definitions

"Bead Core" generally means one or more annular tensile members that are associated with holding the tire to the rim. Often, the bead core is made from one or more steel wires wound to the bead core. The bead core may have various cross-sections such as round or hexagonal.

"Apex" or the equivalent term "bead filler apex" means an elastomeric filler structure which is located radially above the bead core and between the plies in a pneumatic tire.

"Flipper" refers to a reinforcing fabric for placing about the bead core for strength and to tie the bead core in the tire body. It may be a fabric or a reinforced rubber ply.

### Brief Description of the Drawings

The invention will be described by way of example and with reference to the accompanying drawings in which:
Fig. 1 shows the forming of an apex and its attaching to a bead core with a flipper wrapped about the bead core in a first example;
Fig. 2 shows the finished bead core-apex subassembly of the first example on a support surface;
Fig. 3 shows a nozzle in fluid communication with a pumping or extrusion device while discharging a rubber compound onto a rotating support surface to form an apex;
Fig. 4 shows a first step of the forming of an apex and its attaching to a bead core with a flipper wrapped about the bead core in a second example;
Fig. 5 shows a second step of the forming of the apex and its attaching to the bead core with a flipper wrapped about the bead core in the second example;
Fig. 6 shows the finished bead core-apex subassembly of the second example on a support surface;
Fig. 7 shows a top view of an apparatus used in the manufacturing of the bead core-apex subassembly of the second example comprising four stations at different locations.

### Detailed Description of Example Embodiments of the Invention

Fig. 1 explains a first example of the invention and shows the manufacturing of a bead core-apex subassembly 5. In a first step, an annular bead core 20 with a flipper 21 wrapped about the bead core in such a way that the flipper completely surrounds the bead core 20 or at least essentially surrounds the bead core 20 is placed on a support surface 10 which may be horizontally oriented and which is rotatable about an axis 12 in the indicated direction or in the opposite direction. The annular bead core 20 with the flipper 21 wrapped around the bead core 20 is first placed on a spacer 11 (which may also be called transfer support) and then, together with the spacer 11, put on the support surface 10. The spacer 11 may be a ring-shaped disk made from a metallic material or from a Teflon™ material. If used, the spacer 11 together with the annular bead core 20 is positioned on the support surface 10 which may be made from a metallic material.

The support surface 10 may include a stop or clamping device 13 which serves to allow a precise positioning of the bead core 20 on the support surface 10, and optionally also to clamp the bead core 20 on the support surface 10. The shape of the stop 13 in the contact with the bead core 20 with the flipper 21 wrapped around the bead core 20 may be adapted to the shape of the bead core 20 to provide a kind of stop having a complementary shape to the shape of the bead core 20 with the flipper 21.

After the bead core 20 with the flipper 21 has been put on the support surface 10, either with the spacer 11 or without the spacer 11, an elastomeric material 22 is discharged through a nozzle 51 on the support surface 10 or, if applicable, on the spacer 11 to form an apex 23 from the discharged rubber compound attached to the flipper 21 and, via the flipper 21, to the bead core 20. The rubber compound may be discharged in the form of a strip as indicated in Figure 1 while the support surface 10 rotates about the axis 12.

Fig. 2 shows the final step of the manufacturing of the bead core-apex subassembly 5 showing the completed apex 23 formed from the extruded strips with the stops or clamping devices 13 being in a retracted position so that the spacer 11 may be removed from the support surface 10 together with the finished bead core-apex subassembly 5. The apex 23 may have a substantially triangular shape with a tip 40 and a base 41 of the triangle being in contact with the flipper 21.

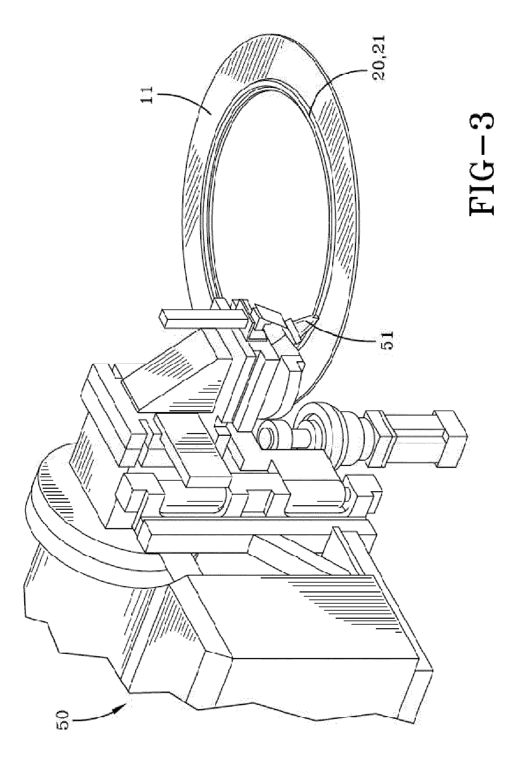

Fig. 3 shows an apparatus 50 for discharging a rubber compound onto the support surface 10 or the spacer 11 through a nozzle 51 while the support surface 10 rotates and an apex 23 is formed from this rubber compound. The nozzle 51 may be in fluid communication with a pumping or extrusion device such as an extruder device followed by a gear pump. The nozzle 51 may comprise a shaping die for shaping the discharged rubber compound into the shape of an apex, i.e., for instance into a substantially triangular shape as shown in Fig. 2. As the apparatus 50, an apparatus as described in EP 1 418 043 A2, may be used. Alternatively, an apparatus as described in EP 1 749 648 A2 may be used.

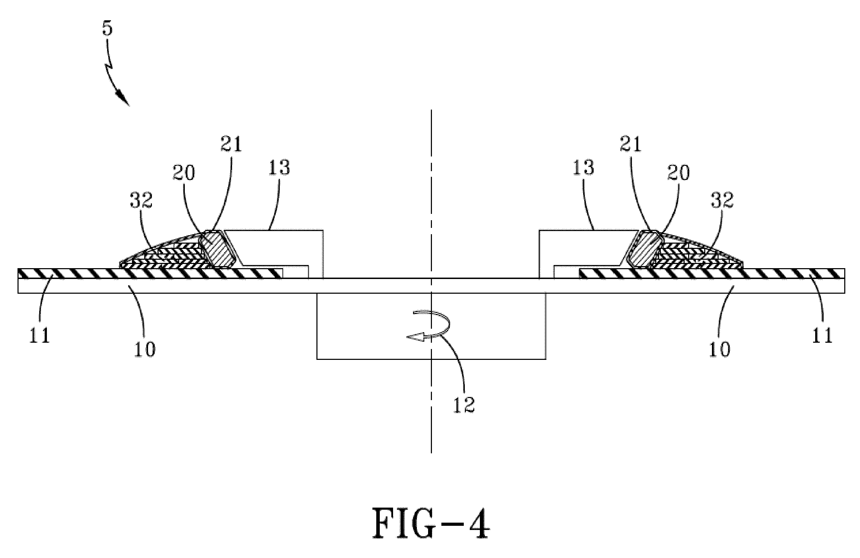

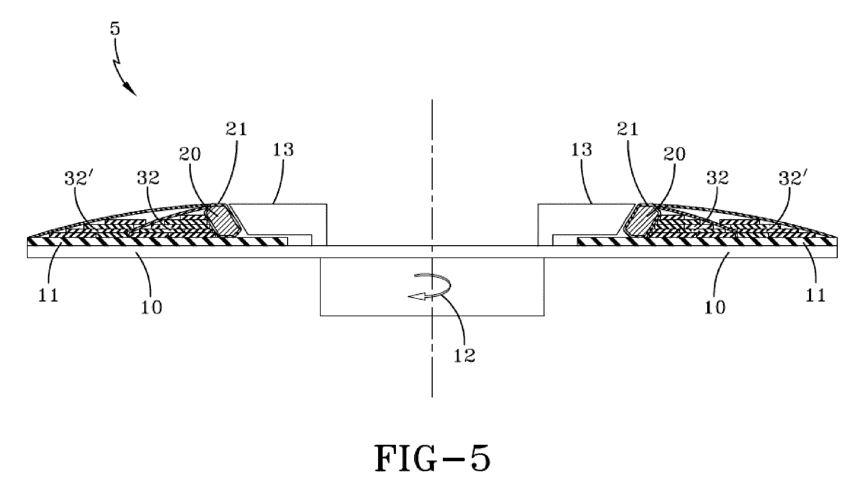

Fig. 4 shows a second example of a bead core-apex subassembly 5. The second example differs from the subassembly of Figs. 1 and 2 by the design of the apex 33 which is in the example described by Figs. 4 to 6 made from two different rubber materials in such a way that the apex 33 comprises a first segment 32 and a second segment 32'. Fig. 4 explains the discharging of the first rubber compound to manufacture the first segment 32. Initially, an annular bead core 20 with a flipper 21 wrapped about the bead core 20 in such a way that the flipper fully surrounds the bead core 20 or at least substantially surrounds the bead core 20 is provided and positioned on the rotatable support surface 10 or, if applicable, on the spacer 11. Then, a first rubber compound in the form of strips is discharged as shown in Fig. 4 while the support surface 10 rotates about the axis 12 to establish the first segment 32. In a further step (see Fig. 5) a second rubber compound is discharged to establish the second segment 32'.

The first segment 32 and the second segment 32' may both have a substantially triangular shape with the second segment 32' forming the tip 40 of the apex 33 and the first segment 32 forming the base 41 of the apex 33 or at least substantially the base 41 of the apex 32 and being in contact with the flipper 21 and thereby with the annular bead core 20.

In order to establish the first and second segments 32, 32', the apparatus 50 shown in Figure 3 may again be used. Two of such apparatuses 50 may be used, one for discharging the rubber compound for the first segment 32 and a second one for discharging the rubber compound of the second segment 32'.

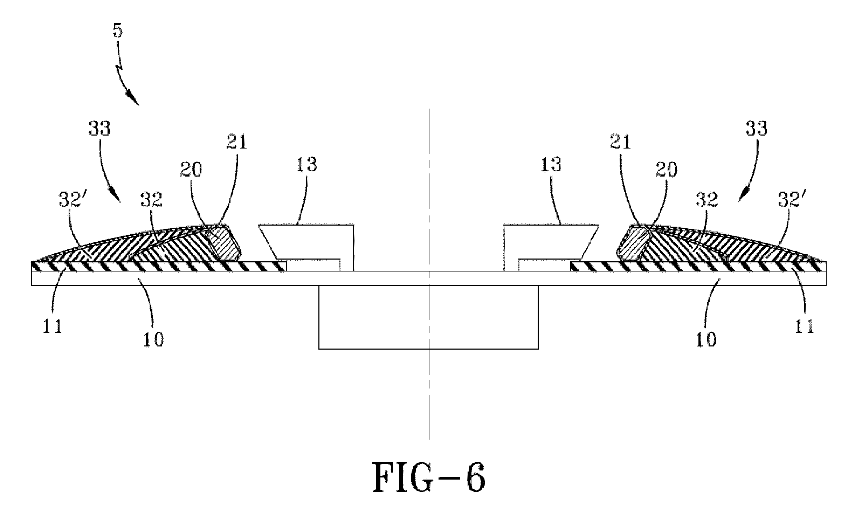

Fig. 6 shows the finished bead core-apex subassembly 5 of the second example with the stop or clamping device 13 being in the retracted position so that the spacer 11 with the sub assembly 5 may be removed from the support surface 10 or, if no spacer 11 is used, the finished bead core-apex subassembly may be directly taken off from the support surface 10.

The flipper 21 in the above described first or second example may be a flipper made from a conventional flipper material as commonly used in tire manufacturing, i.e., a fabric or a reinforced rubber ply, for instance.

The first rubber composition used in the second example and the second rubber composition used in the second example may differ in their shore A hardness. In one example, the difference in shore A hardness is at least 3, alternatively at least 5 or at least 10. In another example, the shore A hardness of the first segment is larger, by at least 3 larger than the shore A hardness of the second segment.

The discharge of the elastomeric material(s) for establishing the apex 23 or the first and second segments 32, 32' of the apex 33 is done while the rotatable support 10 is rotated by substantially 360 degrees or by an integer multiple of 360 degrees. During rotation of the support 10 the nozzle 51 is moved radially relative to the annular bead core 20 located on the support surface 10 while discharging the rubber material so that the strips are positioned on the support surface or the spacer 11 as shown in Figures 1, 4 and 5 respectively, i.e., initially laterally adjacent (with or without overlap) and then in a defined layered configuration in order to successively build up the desired shape of the apex 23 or 32 or the respective apex segment 32, 32'.

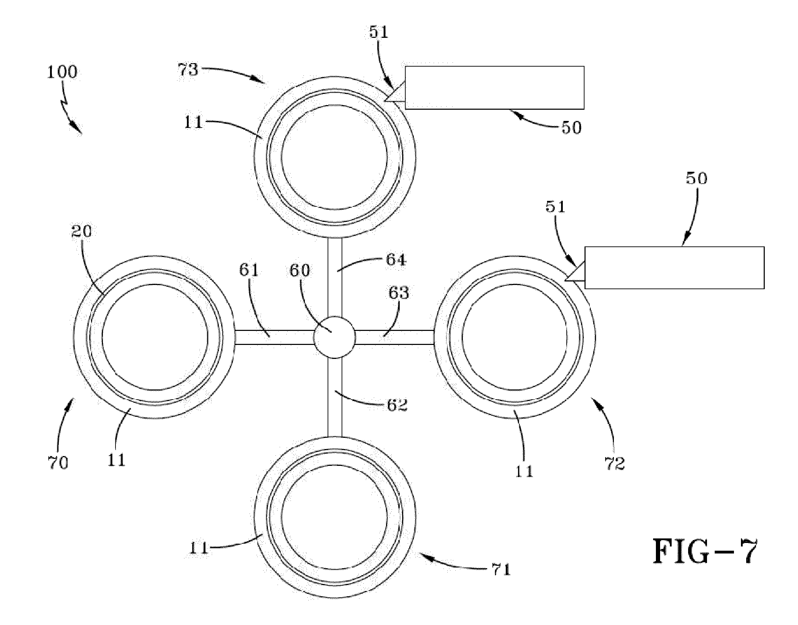

Fig. 7 shows a top view onto an apparatus 100 for manufacturing a bead core-apex sub assembly 5 in accordance with the above-described examples. The apparatus 100 comprises a plurality of different stations 70, 71, 72, 73 which are rotatable about a center 60. In an example embodiment, one of the stations is a loading station 71, one is an unloading station 70, and one or two of the stations are rubber discharge stations 72, 73. The apparatus 100 of Fig. 7 may be used to manufacture an annular bead core-apex subassembly in accordance with Figs. 1-2 or in accordance with Figs. 4-6.

In one example, the apparatus 100 comprises at least a first station 71 at a first location having a first support surface and a second station 72 at a second location having a second support surface. The first support surface is mounted to a first support element and is rotatable on the first support element about an axis extending perpendicular to the first support surface. The second support surface is mounted to a second support element and is rotatable on the second support element about an axis extending perpendicular to the second support surface. The apparatus 100 further comprises a moving device configured for moving the first support surface from the first location to the second location and for moving the second support surface from the second location to either the first location or to a further location. The apparatus 100 further comprises at least one handling device selected from the group consisting of (i) a loading device for positioning the annular bead core 20 on the respective support surface at the first location, and (ii) an unloading device for removing the annular bead core-apex subassembly 5 from the respective support surface at the first location. The apparatus 100 also comprises at least a first nozzle 51 in fluid communication with a first pumping or extrusion device 50 for discharging a first rubber compound onto a respective support surface at the second location.

In the example shown in Fig. 7, the apparatus 100 further comprises a third station 73 at a third location having a third support surface. The third support surface is mounted to a third support element and is rotatable on the third support element about an axis extending perpendicular to the third support surface. When using the third station 73, the moving device is configured for moving the first support surface from the first location to the second location, for moving the second support surface from the second location to the third location, and for either moving the third support surface from the third location to the first location or to a further location. In this example, the handling device is a loading device for positioning the annular bead core 20 on the respective support surface at the first location, and the apparatus 10 also comprises an unloading device for removing the annular bead core-apex subassembly 5 from a respective support surface at the third location. Alternatively, the apparatus 100 may comprise a second nozzle 51 in fluid communication with a pumping or extrusion device 50 for discharging a second rubber compound onto a respective support surface at the third location.

In the example shown in Fig. 7, the apparatus 100 further comprises a fourth station 70 at a fourth location having a fourth support surface, wherein the fourth support surface is mounted to a fourth support element and is rotatable on the fourth support element about an axis extending perpendicular to the fourth support surface. In this example, the moving device is configured for moving the first support surface from the first location to the second location, for moving the second support surface from the second location to the third location, for moving the third support surface from the third location to the fourth location, and for either moving the fourth support surface to the first location or to a further location. In this example, the handling device is a loading device for positioning the annular bead core 20 on a respective support surface at the first location, and the apparatus 100 comprises an unloading device for removing the finished annular bead core-apex subassembly 5 from a respective support surface at the fourth location. In this example, the apparatus 100 further comprises a second nozzle 51 in fluid communication with a second pumping or extrusion device 50 for discharging a second rubber compound onto a respective support surface at the third location in order to manufacture a bead core-apex subassembly as shown in Fig. 6 with both nozzles 51 discharging different rubber compounds in the form of strips at different locations. Alternatively, the apparatus 100 of such a configuration may also be used to manufacture a bead core-apex subassembly as shown in Fig. 2 discharging the same rubber compound in the form of strips at different locations to faster create the bead core-apex subassembly 5 shown in Fig. 2, i.e., to gain cycle time.

In the example shown in Fig. 7, the first, second, third and fourth support surface may each be a flat, disc-shaped support surface. The first support element may be a first arm 61 extending from the center 60, the second support element is a second arm 62 extending from said center 60, the third support element is a third arm 63 extending from said center 60, and the fourth support element is a fourth arm 64 extending from said center 60. The first, second, third and fourth support elements or arms are rotatable about the center 60. The first, second, third and fourth arm 61, 62, 63, 64 are arranged about the center 60 at an angular distance of substantially 90 degrees. The first, second, third and fourth arm 61, 62, 63, 64 may have a substantially equal length.

In case the apparatus 100 comprises only the first and second station 71, 72 but not the third and fourth station 73, 70, the first and second arm 61, 62 may be arranged about the center 60 at an angular distance of substantially 180 degrees. Alternatively, in case the apparatus 100 comprises four stations, 70, 71, 72, 73, the stations may be arranged in a linear configuration.

In case the apparatus 100 comprises only the first, second and third station 71, 72, 73 but not the fourth station 70, the first, second and third arm 61, 62, 63 may be arranged about the center 60 at an angular distance of substantially 120 degrees.

The loading device of the apparatus 100 may be configured for holding the spacer disc 11 on which the annular bead core 20 is located and for moving this spacer disk 11 together with the annular bead core 20 to the first support surface, thereby positioning the annular bead core 20 on the first support surface.

The unloading device of the apparatus 100 may be configured for holding the spacer disc 11 on which a finished bead core-apex subassembly 5 is located and for removing this spacer disk 11 together with the bead core-apex subassembly 5 from the first support surface.

One or both of the first and second pumping or extrusion devices comprise a gear pump.

In one example, one or both of the first and second nozzle 51 is configured to provide a rubber compound in the shape of a strip. Alternatively, one or both of the first and second nozzles 51 may comprise a shaping element for bringing the discharged rubber compound into a substantially triangular shape.

The first nozzle 51 of the apparatus 100 may be moveable in a radial direction with respect to the annular bead core 20 at the second station.

The second nozzle of the apparatus 100 may also be moveable in a radial direction with respect to the annular bead core 20 at the third station.

Overall, the example of Fig. 7 allows it to form a dual apex using two nozzles 51 wherein each of the nozzles is associated with a respective extruder device and a gear pump. The nozzles 51 each provide a profiled strip which is applied on the horizontal surface of the respective support surface 10 or spacer 11 while it rotates. The application of the strips made from the first compound is tangential to the outer peripheral surface of the bead core 20 and the application of the strips made from the second compound completes the desired apex shape. During the rotation of the respective support surface 10 or spacer 11, the respective strips may move in an axial direction to successively build the desired contour of the apex 33. With such an approach there is no longer a need for a duplex extruder line with different apex dies per tire size.

## Claims

1. A bead core-apex subassembly, the subassembly (5) comprising an annular bead core (20), a flipper (21) and an apex (23), wherein the flipper (21) is wrapped about the bead core (20) such that it encloses the bead core (20), and wherein the apex (23) is in contact with the flipper (21) and comprises at least a first segment (32) and a second segment (32'), the first segment (32) having a composition different from the composition of the second segment (32'), **characterized in that** the flipper (21) completely encloses the bead core.

2. The subassembly of claim 1 wherein the bead core (20) comprises one or more steel wires and/or wherein the flipper (21) is a fabric or is a reinforced rubber ply.

3. The subassembly of claim 1 or 2 wherein the apex (23) has substantially a triangular shape and has an apex tip (40) and a base (41) and wherein the apex (23) extends from the base (41) to the tip (40), the base (41) being attached to the flipper (21).

4. The subassembly of at least one of the previous claims wherein at least one of the cross-section of the first segment (32) and the cross-section of the second segment (32') has substantially a triangular shape.

5. The subassembly of at least one of the previous claims wherein the apex (23) consists of the first segment (32) and the second segment (32') and wherein the cross-section of the first segment (32) and the cross-section of the second segment (32') have substantially a triangular shape.

6. The subassembly of at least one of the previous claims wherein only the first segment (32) of the apex (23) is in contact with the flipper (21).

7. The subassembly of at least one of the previous claims wherein the first segment (32) comprises a first rubber composition, wherein the second segment (32') comprises a second rubber composition, and wherein the shore A hardness of the first rubber composition differs by at least 3, alternatively by at least 5 or at least 10, from the shore A hardness of the second rubber composition or wherein the shore A hardness of the first segment is larger, by at least 3 larger, than the shore A hardness of the second segment.

8. A pneumatic tire comprising a bead core-apex subassembly (5) in accordance with at least one of the previous claims.

9. A method of manufacturing a bead core-apex subassembly (5), the method comprising the steps of:
providing an annular bead core (20);
wrapping a flipper (21) about the annular bead core (20) such that the flipper (21) encloses the bead core (20);
positioning the bead core (20) with the flipper (21) wrapped about the bead core (20) on a rotatable support surface (10);
providing a nozzle (51) in fluid communication with a pumping or extrusion device (50);
rotating the support surface (10) about an axis (12);
discharging a rubber compound through the nozzle (51) onto the rotating support surface (10) and forming an apex (23) from the discharged rubber compound, the apex (23) being attached to the flipper (21).

10. The method of claim 9 wherein the apex (23) is shaped into a substantially triangular shape while or after discharging the rubber compound onto the rotating support surface (10), the apex (23) extending from a base (41) to a tip (40), the base (41) being attached to the flipper (21).

11. The method of claim 9 or 10 wherein the pumping or extrusion device (50) comprises a gear pump.

12. The method of at least one of the claims 9 to 11 wherein the nozzle (51) comprises a tongue, the tongue compressing the rubber compound against at least one of the rotating support surface (10) and the bead core (20) with the flipper (21) wrapped about the bead core (20).

13. The method of at least one of the claims 9 to 12 wherein the rubber compound is discharged substantially in the shape of a strip onto the rotating support surface (10) and wherein the nozzle (51) is moved radially relative to the annular bead core (20) located on the support surface (10) while discharging the strip rubber compound.

14. The method of at least one of the claims 9 to 13 wherein the apex (23) is formed from one or more rubber strips discharged through one or more nozzles (51) onto the rotating support surface (10); and/or wherein at least two different rubber compounds are discharged onto the rotating support surface (10) for forming an apex (23) having a first segment (32) and a second segment (32'), the first segment having a composition different from the composition of the second segment.

## Patentansprüche

1. Wulstkern-Kernprofil-Unterbaugruppe, wobei die Unterbaugruppe (5) einen ringförmigen Wulstkern (20), eine Wulstfahne (21) und ein Kernprofil (23) umfasst, wobei die Wulstfahne (21) so um den Wulstkern (20) herumgeschlagen ist, dass sie den Wulstkern (20) umschließt, und wobei das Kernprofil (23) mit der Wulstfahne (21) in Kontakt ist und mindestens ein erstes Segment (32) und ein zweites Segment (32') umfasst, wobei das erste Segment (32) eine Zusammensetzung aufweist, die verschieden von der Zusammensetzung des zweiten Segments (32') ist, **dadurch gekennzeichnet, dass** die Wulstfahne (21) den Wulstkern vollständig umschließt.

2. Unterbaugruppe nach Anspruch 1, wobei der Wulstkern (20) einen oder mehrere Stahldrähte umfasst und/oder wobei die Wulstfahne (21) ein Gewebe ist oder eine verstärkte Kautschuklage ist.

3. Unterbaugruppe nach Anspruch 1 oder 2, wobei das Kernprofil (23) im Wesentlichen eine dreieckige Form aufweist und eine Kernprofilspitze (40) und eine Basis (41) aufweist, und wobei das Kernprofil (23) sich von der Basis (41) bis zu der Spitze (40) erstreckt, wobei die Basis (41) an der Wulstfahne (21) befestigt ist.

4. Unterbaugruppe nach mindestens einem der vorgenannten Ansprüche, wobei mindestens eines des Querschnitts des ersten Segments (32) und des Querschnitts des zweiten Segments (32') im Wesentlichen eine dreieckige Form aufweist.

5. Unterbaugruppe nach mindestens einem der vorgenannten Ansprüche, wobei das Kernprofil (23) aus dem ersten Segment (32) und dem zweiten Segment (32') besteht und wobei der Querschnitt des ersten Segments (32) und der Querschnitt des zweiten Segments (32') im Wesentlichen eine dreieckige Form aufweisen.

6. Unterbaugruppe nach mindestens einem der vorgenannten Ansprüche, wobei nur das erste Segment (32) des Kernprofils (23) in Kontakt mit der Wulstfahne (21) ist.

7. Unterbaugruppe nach mindestens einem der vorgenannten Ansprüche, wobei das erste Segment (32) eine erste Kautschukzusammensetzung umfasst, wobei das zweite Segment (32') eine zweite Kautschukzusammensetzung umfasst, und wobei die Shore A-Härte der ersten Kautschukzusammensetzung sich um mindestens 3, alternativ um mindestens 5 oder mindestens 10, von der Shore A-Härte der zweiten Kautschukzusammensetzung unterscheidet oder wobei die Shore A-Härte des ersten Segments größer, um mindestens 3 größer, als die Shore A-Härte des zweiten Segments ist.

8. Luftreifen, umfassend eine Wulstkern-Kernprofil-Unterbaugruppe (5) nach mindestens einem der vorgenannten Ansprüche.

9. Verfahren zur Herstellung einer Wulstkern-Kernprofil-Unterbaugruppe (5), umfassend die Schritte des:
Vorsehens eines ringförmigen Wulstkerns (20);
Herumschlagens einer Wulstfahne (21) um den ringförmigen Wulstkern (20), derart, dass die Wulstfahne (21) den Wulstkern (20) umschließt;
Positionierens des Wulstkerns (20) mit der um den Wulstkern (20) herumgeschlagenen Wulstfahne (21) auf einer rotierbaren Auflagefläche (10);
Vorsehens einer Düse (51) in Fluidkommunikation mit einer Pump- oder Extrusionsvorrichtung (50);
Rotierens der Auflagefläche (10) um eine Achse (12);
Austragens einer Kautschukmischung durch die Düse (51) auf die rotierende Auflagefläche (10) und Formens eines Kernprofils (23) aus der ausgetragenen Kautschukmischung, wobei das Kernprofil (23) an der Wulstfahne (32) befestigt wird.

10. Verfahren nach Anspruch 9, wobei das Kernprofil (23), während oder nach dem Austragen der Kautschukmischung auf die rotierende Auflagefläche (10), zu einer im Wesentlichen dreieckigen Form geformt wird, wobei das Kernprofil (23) sich von einer Basis (41) bis zu einer Spitze (40) erstreckt, wobei die Basis (41) an der Wulstfahne (21) befestigt ist.

11. Verfahren nach Anspruch 9 oder 10, wobei die Pump- oder Extrusionsvorrichtung (50) eine Getriebepumpe umfasst.

12. Verfahren nach mindestens einem der Ansprüche 9 bis 11, wobei die Düse (51) eine Zunge umfasst, wobei die Zunge die Kautschukmischung gegen mindestens eines der rotierenden Auflagefläche (10) und des Wulstkerns (20) mit der um den Wulstkern (20) herumgeschlagenen Wulstfahne (21) zusammenpresst.

13. Verfahren nach mindestens einem der Ansprüche 9 bis 12, wobei die Kautschukmischung im Wesentlichen in Form eines Streifens auf die rotierende Auflagefläche (10) ausgetragen wird und wobei die Düse (51) während des Austragens der Streifen-Kautschukmischung bezüglich des auf der Auflagefläche (10) befindlichen ringförmigen Wulstkerns (20) radial bewegt wird.

14. Verfahren nach mindestens einem der Ansprüche 9 bis 13, wobei das Kernprofil (23) aus einem oder mehreren Kautschukstreifen gebildet wird, die durch eine oder mehrere Düsen (51) auf die rotierende Auflagefläche (10) ausgetragen werden; und/oder wobei mindestens zwei verschiedene Kautschukmischungen auf die rotierende Auflagefläche (10) ausgetragen werden, um ein Kernprofil (23) mit einem ersten Segment (32) und einem zweiten Segment (32') zu bilden, wobei das erste Segment eine Zusammensetzung aufweist, die verschieden von der Zusammensetzung des zweiten Segments ist.

## Revendications

1. Sous-assemblage tringle de talon-bourrage sur tringle, le sous-assemblage (5) comprenant une tringle de talon annulaire (20), une languette de protection (21) et un bourrage sur tringle (23), dans lequel la languette de protection (21) vient s'enrouler autour de la tringle de talon (20) de telle sorte qu'elle renferme la tringle de talon (20), et dans lequel le bourrage sur tringle (23) entre en contact avec la languette de protection (21) et comprend au moins un premier segment (32) et un deuxième segment (32'), le premier segment (32) possédant une composition différente de la composition du deuxième segment (32'), **caractérisé en ce que** la languette de protection (21) renferme complètement la tringle de talon.

2. Sous-assemblage selon la revendication 1, dans lequel la tringle de talon (20) comprend un ou plusieurs fils en acier et/ou dans lequel la languette de protection (21) est constituée d'un tissu ou est constituée d'une nappe de caoutchouc renforcée.

3. Sous-assemblage selon la revendication 1 ou 2, dans lequel le bourrage sur tringle (23) possède essentiellement une configuration triangulaire et possède une extrémité de bourrage sur tringle (40) et une base (41), et dans lequel le bourrage sur tringle (23) s'étend à partir de la base (41) jusqu'à l'extrémité (40), la base (41) étant fixée à la languette de protection (21).

4. Sous-assemblage selon au moins une des revendications précédentes, dans lequel au moins une section transversale choisie parmi la section transversale du premier segment (32') et la section transversale du deuxième segment (32') possède essentiellement une configuration triangulaire.

5. Sous-assemblage selon au moins une des revendications précédentes, dans lequel le bourrage sur tringle (23) est constitué par le premier segment (32) et par le deuxième segment (32'), et dans lequel la section transversale du premier segment (32') et la section transversale du deuxième segment (32') possèdent essentiellement une configuration triangulaire.

6. Sous-assemblage selon au moins une des revendications précédentes, dans lequel seul le premier segment (32) du bourrage sur tringle (23) entre en contact avec la languette de protection (21).

7. Sous-assemblage selon au moins une des revendications précédentes, dans lequel le premier segment (32) comprend une première composition de caoutchouc, dans lequel le deuxième segment (32) comprend une deuxième composition de caoutchouc, et dans lequel la dureté Shore A de la première composition de caoutchouc diffère, à concurrence d'au moins 3, en variante à concurrence d'au moins 5 ou d'au moins 10, de la dureté Shore A de la deuxième composition de caoutchouc, ou dans lequel la dureté Shore A du premier segment est supérieure, supérieure à concurrence d'au moins 3, à la dureté Shore A du deuxième segment.

8. Bandage pneumatique comprenant un sous-assemblage tringle de talon-bourrage sur tringle (5) selon au moins une des revendications précédentes.

9. Procédé de fabrication d'un sous-assemblage tringle de talon-bourrage sur tringle (5), le procédé comprenant les étapes consistant à :
procurer une tringle de talon annulaire (20) ;
enrouler une languette de protection (21) autour de la tringle de talon annulaire (20) de telle sorte que la languette de protection (21) renferme la tringle de talon (20) ;
positionner la tringle de talon (20), la languette de protection (21) entourant la tringle de talon (20), sur une surface de support rotative (10) ;
procurer une buse (51) en communication par fluide avec un dispositif de pompage ou d'extrusion (50) ;
faire tourner la surface de support (10) autour d'un axe (12) ;
décharger un composé de caoutchouc à travers la buse (51) sur la surface de support rotative (10) et former un bourrage sur tringle (23) à partir du composé de caoutchouc déchargé, le bourrage sur tringle (23) étant fixé à la languette de protection (21).

10. Procédé selon la revendication 9, dans lequel le bourrage sur tringle (23) est configuré pour prendre une forme essentiellement triangulaire pendant ou après la décharge du composé de caoutchouc sur la surface de support rotative (10), le bourrage sur tringle (23) s'étendant à partir d'une base (41) jusqu'à une extrémité (40), la base (41) étant fixée à la languette de protection (21).

11. Procédé selon la revendication 9 ou 10, dans lequel le dispositif de pompage ou d'extrusion (50) comprend une pompe à engrenages.

12. Procédé selon au moins une des revendications 9 à 11, dans lequel la buse (51) comprend une languette, la languette comprimant le composé de caoutchouc contre au moins un élément choisi parmi la surface de support rotative (10) et la tringle de talon (20), la languette de protection (21) entourant la tringle de talon (20).

13. Procédé selon au moins une des revendications 9 à 12, dans lequel le composé de caoutchouc est déchargé essentiellement sous la forme d'une bande sur la surface de support rotative (10), et dans lequel la buse (51) se déplace en direction radiale par rapport à la tringle de talon annulaire (20) disposée sur la surface de support (10) lors de la décharge du composé de caoutchouc sous la forme d'une bande.

14. Procédé selon au moins une des revendications 9 à 13, dans lequel le bourrage sur tringle (23) est constitué par une ou plusieurs bandes de caoutchouc déchargées à travers une ou plusieurs buses (51) sur la surface de support rotative (10) ; et/ou dans lequel au moins deux composés de caoutchouc différents sont déchargés sur la surface de support rotative (10) pour former un bourrage sur tringle (23) possédant un premier segment (32) et un deuxième segment (32'), le premier segment possédant une composition différente de la composition du deuxième segment.
